# DEMANDE DE BREVET EUROPEEN

(11) **EP 0 546 902 A1**
(43) Date de publication de la demande: **16.06.1993**
(21) Numéro de dépôt: 92403287.3
(22) Date de dépôt: 04.12.1992
(51) Int. Cl.: B64C 25/58, F16F 9/06, F16F 9/348

(54) **Dispositif d'écrêtage pour amortisseur de train d'atterrissage d'aéronef, et amortisseur comportant un tel dispositif**

(30) Priorité: 11.12.1991 FR 9115371
(71) Demandeur: MESSIER BUGATTI, F-78140 Velizy Villacoublay (FR)
(72) Inventeur: Lucienne, Philippe, F-60300 Aumont (FR); De Pindray, Albert, F-78114 Magny-les-Hameaux (FR)
(74) Mandataire: Jaunez, Xavier

(57) **Abrégé**

L'invention concerne un dispositif d'écrêtage d'efforts pour amortisseurs de trains d'atterrissage d'aéronefs, notamment d'hélicoptères, ainsi qu'un amortisseur équipé d'un tel dispositif.

Conformément à l'invention, il est prévu un boîtier 201 formant cloison pour le corps principal 101 de l'amortisseur, ledit boîtier présentant un fond 202 dont la partie centrale inclut un diaphragme 210 à petits orifices de laminage 211, et des organes d'écrêtage d'efforts sont également prévus, avec d'une part une soupape annulaire 225 agencée autour du diaphragme 210, et permettant, lorsqu'elle est ouverte, de faire passer en un temps très court un volume important de fluide hydraulique, et d'autre part un organe de rappel élastique 226 maintenant la soupape annulaire 225 en position de fermeture, et autorisant l'ouverture de ladite soupape à partir d'un seuil prédéterminé.

## Description

La présente invention concerne les amortisseurs de trains d'atterrissage d'aéronefs, notamment d'hélicoptères, et plus particulièrement les moyens prévus pour un écrêtage des efforts encaissés en cas d'atterrissage en catastrophe (situation communément appelée "crash").

Dans le cas particulier des hélicoptères par exemple, il convient d'organiser un écrêtage des efforts du système destiné à absorber l'énergie lors d'une chute d'hélicoptère à grande vitesse suite à une panne du système de sustentation. Lorsque le train d'atterrissage de l'hélicoptère est du type à balancier, l'amortisseur est articulé à son extrémité inférieure sur le balancier et à son extrémité supérieure sur la structure de l'hélicoptère, en étant disposé sensiblement verticalement, de sorte que la réaction du sol tend, par l'intermédiaire de la roue ou des roues associées, à faire pivoter le balancier et à enfoncer la tige de l'amortisseur dans le corps dudit amortisseur. De ce fait, en cas d'atterrissage en catastrophe, comme la vitesse verticale d'impact est beaucoup plus importante qu'en fonctionnement normal, il devient nécessaire de prévoir un écrêtage d'efforts qui soit capable d'entrer en action aussi rapidement que possible.

Il existe déjà un grand nombre d'amortisseurs, dont certains comportent des moyens décrêtage d'efforts en cas de surpression excessive.

D'une façon générale, les amortisseurs utilisés sont du type comportant un corps principal dans lequel coulisse une tige-piston, avec d'une part un moyen d'amortissement hydraulique à diaphragme, intervenant lors des conditions normales d'utilisation, et d'autre part un moyen d'absorption d'énergie à deux chambres contenant un gaz sous pression, dont l'une est à base pression et l'autre à haute pression, intervenant lors d'un atterrissage en catastrophe (situation dite de "crash").

Les moyens d'écrêtage d'efforts éventuellement prévus sont soit confondus avec un composant de l'amortisseur (par exemple un piston séparateur délimitant le volume de la chambre haute pression), soit constitués par un clapet de surpression spécialement conçu pour intervenir en cas de surpression occasionnée par un enfoncement à vitesse élevée de la tige de l'amortisseur dans le corps de celui-ci.

Conformément au premier type précité, on peut par exemple citer un amortisseur avec un corps principal agencé en bas et une tige-piston agencée en haut, le corps principal s'élargissant inférieurement au niveau d'une chambre haute pression délimitée par un piston séparateur surmonté d'un volume d'huile. La tige-piston est quant à elle creuse, pour délimiter une chambre supérieure basse pression adjacente à un volume d'huile en communication, par un dispositif de laminage (orifice dans une cloison) prévu en extrémité inférieure de tige, avec l'huile contenue dans la chambre du corps principal.

Lorsque les conditions d'utilisation sont normales, la réaction verticale du sol provoque une rentrée de la tige dans le corps principal, qui s'accompagne d'une compression du volume gazeux contenu dans la chambre basse pression, ce mouvement de rentrée étant freiné par le dispositif de laminage. Par contre, en cas d'atterrissage en catastrophe, la vitesse d'impact étant beaucoup plus élevée, la pression induite par le dispositif de laminage est communiquée par l'huile du cylindre au piston séparateur, et, comme la pression alors appliquée au piston séparateur dépasse la pression de gonflage de la chambre haute pression, ledit piston descend en comprimant ladite chambre.

Il s'agit dans ce cas d'un écrêtage d'efforts "naturel" effectué par le piston séparateur.

Un tel système est utilisé à l'heure actuelle et donne satisfaction sur le plan de son fonctionnement. Cependant, la structure de l'amortisseur se prête mal à des courses de rétraction importantes. De plus, en cas de "crash", l'huile circule à la fois vers le haut (en passant par l'orifice de laminage pour pénétrer dans la tige en creux) et vers le bas (en passant dans l'élargissement du corps principal pour faire descendre le piston séparateur), de sorte que des perturbations hydrodynamiques peuvent être engendrées dans certaines conditions d'impact.

Conformément au deuxième type précité, on peut par exemple citer un amortisseur avec un corps principal agencé en bas et une tige-piston agencée en haut, le corps principal comportant en extrémité inférieure une chambre haute pression qui est adjacente, par une membrane souple de séparation pouvant s'appuyer un support rigide perforé solidaire dudit corps, à une chambre basse pression, ainsi qu'un dispositif de laminage freinant les déplacements de la tige dans le corps principal par laminage du fluide contenu dans ledit corps et adjacent à la chambre basse pression. La tige-piston est quant à elle creuse, et reçoit un piston séparateur délimitant deux chambres hydrauliques.

Un tel amortisseur est décrit dans le document FR-A-2.608.242.

Le dispositif de laminage alors prévu (qui est associé à un tube cylindro-conique formant absorbeur d'énergie par déformation plastique) comporte d'une part une pluralité de petits orifices de passage agencés circulairement, qui interviennent lors de vitesses normales d'enfoncement de la tige, et d'autre part un clapet central de surpression dont la tige passe par une ouverture centrale de passage de section plus importante que celle des orifices précités, ce clapet étant maintenu en position de fermeture par des rondelles élastiques coniques empilées sur la tige dudit clapet, mais intervenant en cas d'enfoncement brutal de la tige, avec une grande vitesse, dans le corps de l'amortisseur, pour obtenir une section de passage plus grande et éviter des surpressions dommageables.

Un tel système reste cependant relativement complexe, et nécessite plusieurs composants qui doivent être ajustés avec précision.

De plus, le dispositif de laminage présente des inconvénients ou limitations qui sont inhérents à l'agencement même des composants qui le constituent : l'ensemble clapet-tige et rondelles élastiques coniques présente une inertie relativement élevée et met en oeuvre des frottements qu'il est difficile de minimiser, ce qui exclut des temps de réponse très courts, sans parler des risques éventuels de coincement de la tige du clapet ; de plus, la section de passage de l'ouverture centrale reste limitée (on ne peut réduire trop le diamètre de la tige du clapet sous peine de la fragiliser, et on ne peut choisir un diamètre trop grand pour l'ouverture centrale sous peine de réduire par trop la résistance mécanique de la pièce fixe concernée).

L'invention a pour objet de concevoir des moyens d'écrêtage d'efforts qui soient plus performants que les moyens connus rappelés plus haut, et qui soient capables d'intervenir avec des temps de réponse très courts en cas de vitesses d'impact élevées (situation d'atterrissage en catastrophe ou de "crash").

L'invention a aussi pour objet de concevoir des moyens d'écrêtage permettant à la fois un écrêtage important des efforts, et un contrôle précis de la perte de charge associée afin de contrôler les efforts transmis.

L'invention a également pour objet de réaliser un dispositif d'écrêtage d'efforts dont la structure soit simple et de coût de fabrication raisonnable, tout en étant intégrable à des amortisseurs de conception classique.

Il s'agit plus particulièrement d'un dispositif d'écrêtage d'efforts pour amortisseurs de train d'atterrissage d'aéronef, ledit amortisseur étant du type comportant un corps principal dans lequel coulisse une tige-piston, avec d'une part un moyen d'amortissement hydraulique à diaphragme, intervenant lors des conditions normales d'utilisation, et d'autre part un moyen d'absorption d'énergie à deux chambres contenant un gaz sous pression, dont l'une est à basse pression et l'autre à haute pression, intervenant lors d'un atterrissage en catastrophe, caractérisé en ce qu'il comporte:
- un boîtier formant cloison pour le corps principal de l'amortisseur, ledit boîtier présentant un fond dont la partie centrale inclut un diaphragme à petits orifices de laminage ;
- une soupape annulaire agencée autour du diaphragme, et permettant, lorsqu'elle est ouverte, de faire passer en un temps très court un volume important de fluide hydraulique ;
- un organe de rappel élastique maintenant la soupape annulaire en position de fermeture, et autorisant l'ouverture de ladite soupape à partir d'un seuil prédéterminé.

De préférence, le fond du boîtier comporte une pluralité de petits orifices de laminage répartis autour de l'axe dudit fond, et une pluralité d'orifices à grande section de passage, disposés concentriquement autour desdits orifices de laminage. Avantageusement alors, les orifices à grande section de passage sont angulairement répartis autour de l'axe du fond du boîtier, et débouchent dans une chambre annulaire commune qui est fermée par la soupape annulaire.

Il est également intéressant que la soupape annulaire soit réalisée sous forme d'une rondelle annulaire plate, aussi légère que possible, disposée autour d'une rondelle centrale chargée par un ressort de rappel associé pour la fermeture des petits orifices de laminage, ladite rondelle centrale présentant des petits trous de passage pour le laminage en détente. En particulier, l'organe de rappel élastique associé à la soupape annulaire présente une raideur considérablement plus élevée que celle du ressort de rappel associé à la rondelle centrale.

De préférence encore, l'organe de rappel élastique associé à la soupape annulaire est réalisé sous la forme d'un ressort-disque présentant une ouverture centrale de passage, avec un bord intérieur en appui sur ladite soupape annulaire, et un bord extérieur en appui contre une collerette associée du boîtier. Avantageusement alors, l'ensemble constitué par la soupape annulaire et le ressort-disque présente une masse minimum pour permettre une ouverture très rapide de ladite soupape annulaire.

Selon une particularité également intéressante, les bords d'appui intérieur et extérieur du ressort-disque sont conformés pour limiter les efforts de frottement lors de l'ouverture de la soupape annulaire. En particulier, les bords d'appui intérieur et extérieur du ressort-disque forment des bourrelets toriques. Ces bourrelets d'appui peuvent être venus de matière avec la partie restante du ressort-disque, lequel est alors réalisé sous une forme monolithique, ou en variante être constitués par des joncs toriques rapportés.

De préférence encore, la collerette d'appui est interrompue par des ouvertures latérales du boîtier, de façon que le fluide hydraulique puisse s'écouler, lors de l'ouverture de la soupape annulaire, à la fois par l'ouverture centrale du ressort-disque, et par lesdites ouvertures latérales en passant autour dudit ressort-disque.

L'invention concerne également un amortisseur de train d'atterrissage d'aéronef, notamment d'hélicoptère, comportant un corps principal dans lequel coulisse une tige-piston, avec d'une part un moyen d'amortissement hydraulique à diaphragme, intervenant lors des conditions normales d'utilisation, et d'autre part un moyen d'absorption d'énergie à deux chambres contenant un gaz sous pression, dont l'une est à basse pression et l'autre à haute pression, intervenant lors d'un atterrissage en catastrophe, ledit amortisseur étant remarquable en ce qu'il comporte un dispositif d'écrêtage d'efforts présentant l'une au moins des caractéristiques précitées, dispositif dont le boîtier est fixé dans le corps principal, le fond dudit boîtier délimitant d'une part une chambre de fluide hydraulique avec la face terminale de la tige-piston, et étant d'autre part surmonté d'un volume de fluide hydraulique auquel est adjacente la chambre basse pression, ladite chambre basse pression étant par ailleurs délimitée par un piston séparateur qui sert aussi à délimiter la chambre haute pression adjacente.

De préférence alors, la tige-piston est agencée en bas et le corps principal en haut, ladite tige-piston étant articulée inférieurement sur un composant du train d'atterrissage et ledit corps principal étant articulé supérieurement sur la structure de l'aéronef. En particulier le fond du boîtier constitue une butée de fin de course pour la tige-piston lors de la rentrée de celle-ci en situation d'atterrissage en catastrophe.

D'autres caractéristiques et avantages de l'invention ressortiront plus clairement à la lumière de la description qui va suivre et des dessins annexés, concernant un mode de réalisation particulier, en référence aux figures où :
- la figure 1 est une vue en plan schématique illustrant un train d'atterrissage d'hélicoptère, du type à balancier, équipé d'un amortisseur à dispositif d'écrêtage d'efforts en conformité avec l'invention ;
- la figure 2 est une vue en coupe axiale d'un tel amortisseur à dispositif d'écrêtage d'efforts ;
- la figure 3 est une demi-coupe axiale partielle permettant de mieux distinguer la structure de l'ensemble fonctionnel formant à la fois diaphragme et soupape d'écrêtage d'efforts (la soupape du diaphragme central et la soupape annulaire d'écrêtage d'efforts étant ici toutes deux fermées) ;
- les figures 4 et 5 sont des demi-coupes illustrant l'ensemble fonctionnel précédent, respectivement en condition d'utilisation normale (soupape du diaphragme central ouverte, et soupape annulaire d'écrêtage d'efforts fermée), et en cas d'atterrissage en catastrophe ou "crash" (les deux soupapes sont alors ouvertes) ;
- la figure 6 est une demi-coupe axiale analogue à celle de la figure 3, illustrant une variante du ressort-disque du dispositif d'écrêtage d'efforts, selon laquelle les bords d'appui intérieur et extérieur sont constitués par des joncs toriques rapportés.

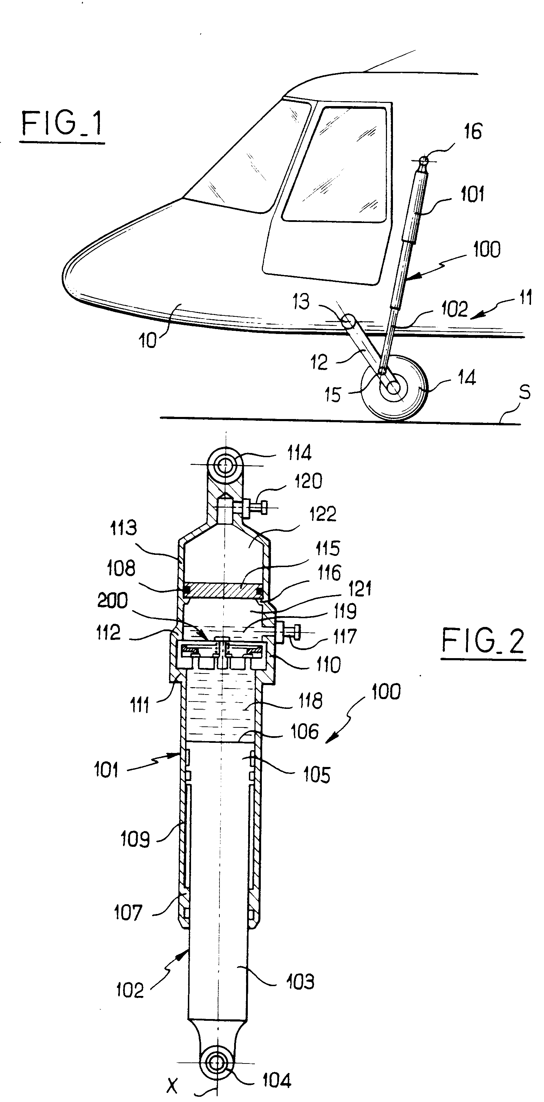

La figure 1 permet de distinguer un amortisseur 100 à dispositif d'écrêtage d'efforts conforme à l'invention, équipant ici un train d'atterrissage 11, du type à balancier, d'un hélicoptère 10. Le train d'atterrissage 11 comporte un balancier 12, articulé en son extrémité supérieure 13 sur la structure de l'hélicoptère 10, et supportant à son autre extrémité une ou plusieurs roues 14. L'amortisseur 100 comporte un corps principal 101 dans lequel coulisse une tige-piston 103, le corps principal 101 étant ici agencé en haut de l'amortisseur et étant articulé en 16 par un embout rotulé associé sur la structure de l'hélicoptère, tandis que la tige-piston 102, agencée en bas dudit amortisseur, est articulée inférieurement en 15, par un embout rotulé associé, sur le balancier 12 du train d'atterrissage. Lorsque la roue 14 vient au contact du sol S, la réaction verticale du sol sur cette roue fait pivoter le balancier 12 du train d'atterrissage autour de son articulation, ce qui provoque l'enfoncement de la tige-piston dans le corps principal de l'amortisseur. En position d'utilisation normale, l'amortisseur 100 du train d'atterrissage est de préférence sensiblement vertical.

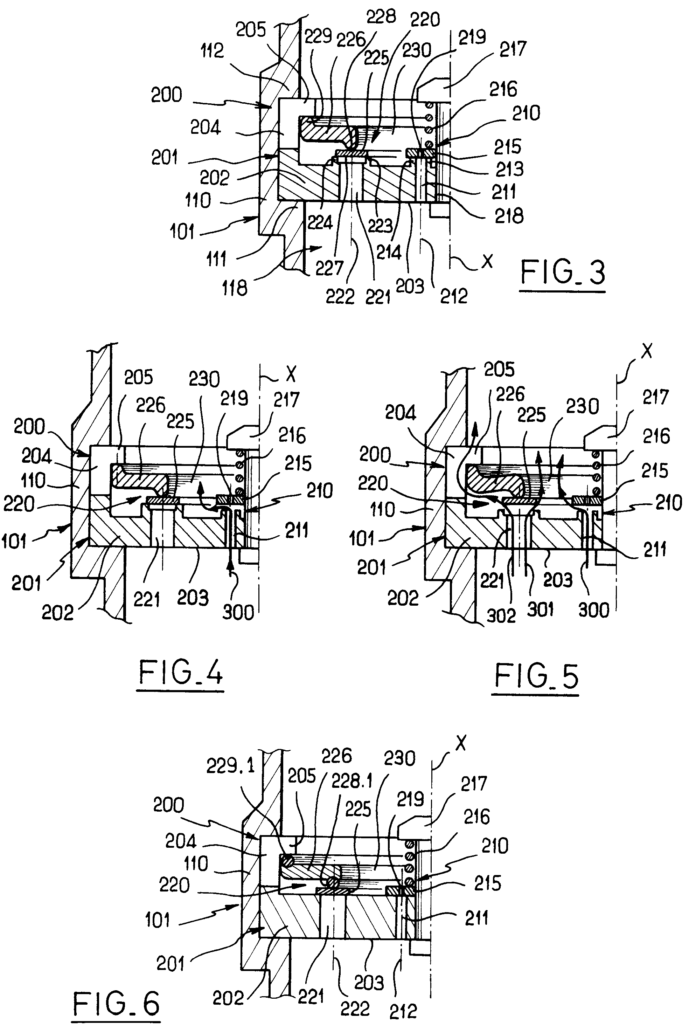

La figure 2 permet de mieux distinguer la structure de l'amortisseur 100 équipant le train d'atterrissage d'hélicoptère représenté en figure 1. L'amortisseur 100 comporte un corps principal 101 dont l'axe est noté X, dans lequel coulisse une tige-piston 102 qui est de préférence pleine. La tige-piston 102 coulisse dans la partie inférieure 109 du corps principal 101, en étant guidée par un épaulement lisse 107 prévu en extrémité inférieure du corps principal 101, la tige piston 102 comportant une partie principale associée 103 dont une extrémité 104 est agencée en embout rotulé pour une liaison d'articulation sur le balancier du train d'atterrissage, tandis que l'autre extrémité 105 est agencée en forme de piston. Le corps principal 101 comporte une partie intermédiaire 110 associée au maintien d'un ensemble fonctionnel 200 formant à la fois diaphragme et soupape d'écrêtage d'efforts, dont la structure sera décrite plus en détail en se référant à la figure 3. La partie intermédiaire 110 du corps principal 101 comporte à cet effet un épaulement inférieur 111, et un épaulement supérieur 112 assurant le maintien axial de l'ensemble fonctionnel 200 précité. Le corps principal 101 se prolonge enfin par une portion supérieure 113 qui se termine par un embout rotulé 114 associé à l'articulation du corps principal sur la structure de l'hélicoptère.

Une chambre 118 est délimitée inférieurement par la face supérieure 106 de la tige-piston 102, et supérieurement par l'ensemble fonctionnel 200. Cette chambre 118 est occupée par un volume correspondant de fluide hydraulique. L'ensemble fonctionnel 200 est d'autre part surmonté d'un volume 119 de fluide hydraulique dont la surface libre délimite inférieurement une chambre 121 contenant un gaz sous pression (en général de l'azote), qui est à basse pression, ladite chambre étant délimitée supérieurement par un piston séparateur 115 et le joint associé 108. Le piston séparateur 115 racle la surface intérieure de la portion supérieure 113 du corps principal 101, ce qui permet de délimiter une chambre adjacente 122 contenant également un gaz sous pression, tel que de l'azote, mais à haute pression. Lorsque l'amortisseur 100 est utilisé dans des conditions normales, la pression régnant dans la chambre basse pression 121 est inférieure à celle régnant dans la chambre haute pression 122, de sorte que le piston séparateur 115 reste maintenu en appui sur une collerette 116 ménagée à cet effet à l'intérieur de la partie supérieure 113 du corps principal 101. La collerette 116 assure ainsi la position à l'état de repos du piston séparateur 115 sous l'effort des différences de pression entre les chambres haute pression 122 et basse pression 121. Une valve 120, de type conventionnel, permet d'assurer le gonflage en gaz haute pression de la chambre 122. Pour ce qui est de la chambre basse pression 121, elle est délimitée supérieurement par le piston séparateur 115 (et le joint d'étanchéité associé 108), et inférieurement par le fluide hydraulique dont le niveau est ajusté par une valve associée 117. Cette dernière valve 117 sert également au gonflage en azote de la chambre basse pression 121.

Lorsqu'un atterrissage est effectué à vitesse verticale normale, le fluide hydraulique contenu dans la chambre 118 est en partie forcé à travers l'ensemble fonctionnel 200, et plus précisément à travers la partie diaphragme dudit ensemble. Le volume d'azote dans la chambre basse pression 121 se réduit alors, et la pression dans ladite chambre augmente en même temps que la vitesse de la tige-piston 102 diminue. La chambre haute pression 122 n'intervient donc pas dans le cadre d'un tel fonctionnement normal, le seuil de pression de la chambre haute pression n'étant pas atteint. Cependant, en cas d'atterrissage en catastrophe, la réaction du sol tend par l'intermédiaire des roues à faire tourner le balancier autour de son articulation et à enfoncer la tige-piston 102 dans le corps principal de l'amortisseur 101 avec une vitesse beaucoup plus élevée : c'est dans une telle situation que l'ensemble fonctionnel 200 doit être capable de faire passer, en un temps très court, un volume important de fluide hydraulique tout en contrôlant de manière très précise la perte de charge correspondante afin de contrôler les efforts transmis. En effet, un tel transfert rapide d'un grand volume de fluide hydraulique à travers l'ensemble fonctionnel 200 permet de diminuer rapidement le volume d'azote de la chambre basse pression 121, de sorte que la pression dans ladite chambre augmente rapidement pour atteindre et dépasser la pression de gonflage de la chambre haute pression 122, ce qui déclenche l'enfoncement du piston séparateur 115, ledit piston comprimant la chambre haute pression 122 jusqu'à utiliser le volume disponible de ladite chambre.

Le retour de l'amortisseur en position initiale s'effectue avec une éventuelle redescente du piston séparateur 115 jusqu'à son appui sur la collerette associée 116, et avec un laminage en détente effectué par la partie diaphragme de l'ensemble fonctionnel 200, de façon à freiner la sortie de la tige-piston 102.

On va maintenant décrire plus en détail l'ensemble fonctionnel 200 dont la structure permet d'assurer cette double fonction de diaphragme et d'écrêtage d'efforts.

On va se référer pour la description structurelle à la figure 3, puis pour le fonctionnement de cet ensemble aux figures 4 et 5 qui illustrent respectivement un mode de fonctionnement normal et un mode de fonctionnement en "crash".

L'ensemble 200 comporte un boîtier 201 formant cloison pour le corps principal 101 de l'amortisseur, ledit boîtier présentant un fond 202 dont la partie centrale inclut un diaphragme 210 à petits orifices de laminage 211 dont les axes 212 sont répartis autour de l'axe X dudit fond (qui est confondu avec l'axe principal de l'amortisseur), chacun de ces petits orifices s'étendant depuis la face inférieure 203 du fond du boîtier, jusqu'à une ouverture supérieure délimitée par deux épaulement concentriques 213, 214. Une rondelle centrale 215, chargée par un ressort de rappel associé 216, est prévue pour la fermeture simultanée des petits orifices de laminage 211. Un boulon central 217, traversant le fond 202 du boîtier par un alésage central 218 de celui-ci, assure à la fois le guidage de la rondelle centrale 215 lors des mouvements de celle-ci, et le maintien en place du ressort de rappel associé 216. La rondelle centrale 215 présente enfin une pluralité de petits trous 219, ménagés en regard des orifices de laminage 211 (mais avec une section de passage plus petite que celle desdits orifices), ces petits trous étant associés au laminage du fluide hydraulique en détente.

La structure générale d'un tel moyen d'amortissement hydraulique à diaphragme est certes bien connue de l'homme de l'art, mais il convient toutefois d'observer que les petits orifices de laminage 211 sont ici agencés dans la zone centrale du fond du boîtier, ceci afin de pouvoir organiser les moyens d'écrêtage d'efforts autour du diaphragme, tout en disposant d'un maximum d'espacement radial pour organiser les orifices associés à cette fonction d'écrêtage d'efforts.

Conformément à un aspect essentiel de l'invention, l'ensemble fonctionnel 200 comporte un moyen d'écrêtage d'efforts 220, qui est essentiellement constitué par une soupape annulaire 225 agencée autour du diaphragme 210, ladite soupape permettant, lorsqu'elle est ouverte, de faire passer en un temps très court un volume important de fluide hydraulique, et par un organe de rappel élastique 226 maintenant la soupape annulaire 225 en position de fermeture,ledit organe de rappel autorisant l'ouverture de ladite soupape à partir d'un seuil prédéterminé.

De préférence, le fond 202 du boîtier 201 comporte ainsi une pluralité de petits orifices de laminage 211 répartis autour de l'axe X dudit fond (les axes 212 de ces orifices étant inscrits sur un cylindre d'axe X), ainsi qu'une pluralité d'orifices 221 à grande section de passage, ces derniers orifices étant disposés autour des orifices de laminage 211 et concentriquement à ceux-ci. Il est ainsi prévu une pluralité d'orifices 221 dont les axes 222 sont alors inscrits sur un autre cylindre d'axe X. On pourra naturellement prévoir des orifices 221 de section circulaire ou non, le nombre et la section de ces orifices étant choisis en fonction du débit que l'on souhaite obtenir lors de l'intervention de ces organes d'écrêtage d'efforts. A titre indicatif, on prévoira par exemple un ensemble de quatre à six orifices de laminage 211, présentant un diamètre de l'ordre de 3 mm, et un nombre aussi important que possible d'orifices 221 à grande section de passage, par exemple douze orifices dont le diamètre pourra atteindre comparativement 8 à 10 mm. Les orifices 221 à grande section de passage sont de préférence angulairement répartis autour de l'axe X du fond du boîtier, et débouchent en outre dans une chambre annulaire commune 227, qui est délimitée par deux épaulements concentriques 223, 224, et qui est fermée par la soupape annulaire 225. Un tel agencement est favorable à l'obtention de l'écoulement souhaité d'un volume important de fluide hydraulique en un temps très court, avec un contrôle très précis de la perte de charge dans la soupape annulaire afin de contrôler les efforts transmis.

La soupape annulaire 225 est de préférence réalisée sous forme d'une rondelle annulaire plate, aussi légère que possible, disposée autour de la rondelle centrale 215 associée à la partie diaphragme de l'ensemble fonctionnel 200. Un tel mode de réalisation est favorable pour l'obtention d'une inertie minimale, ceci pour permettre une levée très rapide de la soupape annulaire d'écrêtage d'efforts, avec un temps de réponse minimum. La soupape annulaire 225, qui est soumise à l'action de l'organe de rappel élastique associé 226, devra toutefois présenter une rigidité suffisante afin de ne pas nuire à l'étanchéité qu'elle réalise lors d'une utilisation normale de l'amortisseur. Dans la pratique, on réalisera de préférence la rondelle centrale 215 et la rondelle annulaire 225 en métal ou en tout autre matériau synthétique équivalent.

L'organe de rappel élastique 226 constitue naturellement un composant fondamental du système d'écrêtage d'efforts. Cet organe de rappel élastique présente une raideur considérablement plus élevée que celle du ressort de rappel 216 associée à la rondelle centrale 215, c'est-à-dire à la fonction diaphragme. On utilisera de préférence un acier à haute résistance pour réaliser l'organe de rappel 226. Compte tenu de la disposition spatiale de la soupape annulaire 225, et de la raideur très élevée que l'on souhaite avoir, il devient très difficile d'organiser le rappel élastique de ladite soupape annulaire par un ou plusieurs ressorts du type hélicoïdal. La structure de l'organe de rappel élastique 226 illustrée ici constitue un mode d'exécution particulièrement avantageux, dans la mesure où elle est compatible avec l'obtention d'une masse minimale pour l'ensemble soupape annulaire - organe de rappel, tout en permettant un contrôle précis de la perte de charge par la soupape annulaire, ce qui permet de rendre quasiment négligeables les effets parasites en aval et en amont de ladite soupape annulaire. L'organe de rappel élastique 226 est en l'espèce réalisé sous la forme d'un ressort-disque, qui présente une ouverture centrale de passage 230, avec un bord intérieur 228 qui est en appui sur la soupape annulaire 225, et un bord extérieur 229 qui est en appui contre une collerette associée 205 du boîtier 201. Le ressort-disque 226 sera conçu pour présenter une loi prédéterminée permettant d'assurer une loi. efforts/course qui est optimisée suivant le résultat désiré. Cette loi prédéterminée pourra être linéaire ou conforme à une courbe déterminée par le calcul.

Il convient par ailleurs de limiter au maximum les efforts de frottement lors de la levée de la soupape annulaire 225. C'est pour cela qu'il est intéressant que les bords d'appui intérieur 228 et extérieur 229 du ressort disque 226 soient conformés à cet effet, en formant par exemple des bourrelets toriques tournés vers les faces d'appui respectives, comme cela est illustré sur la figure 3. Ces bourrelets toriques, référencés 228 et 229 sur la figure 3, peuvent être venus de matière avec la partie centrale du ressort-disque 226, lequel est alors réalisé sous une forme monolithique. On peut en variante prévoir, comme cela est illustré sur la figure 6, des bourrelets d'appui 228.1 et 229.1 constitués par des joncs toriques rapportés, lesdits joncs pouvant être éventuellement solidarisés, par collage ou soudage, au niveau de gorges associées ménagées dans la partie centrale du ressort-disque 226. On utilisera de préférence alors des joncs toriques métalliques.

La figure 3 permet en outre de distinguer l'une des ouvertures latérales 204 du boîtier 201, qui interrompt la collerette d'appui 205 associée au ressort-disque 226. De telles ouvertures latérales 204 favorisent l'obtention d'un débit très important de fluide hydraulique pendant un temps extrêmement court : en effet, le fluide hydraulique pourra s'écouler, lors de l'ouverture de la soupape annulaire 225, non seulement par l'ouverture centrale 230 du ressort-disque 226, mais aussi par la ou les ouvertures latérales 204 du boîtier 201 en passant autour de la périphérie de ce ressort-disque.

On va maintenant décrire le mode de fonctionnement de l'ensemble fonctionnel 200 en se référant aux figures 4 et 5, figures qui illustrent ledit ensemble fonctionnel respectivement en condition d'utilisation normale et en cas d'atterrissage en catastrophe ou "crash".

En figure 4, il s'agit d'un atterrissage à vitesse verticale normale, c'est-à-dire que la pression exercée par le fluide hydraulique lors de la rentrée de la tige-piston dans le corps principal de l'amortisseur est suffisante pour soulever la rondelle centrale 215 contre l'action du ressort de rappel associé 216, mais insuffisante pour mettre en oeuvre les organes d'écrêtage d'efforts, c'est-à-dire soulever la soupape annulaire 225 contre l'action du ressort-disque de rappel associé 226. Le fluide hydraulique traverse donc le fond 202 du boîtier 201 en passant par les petits orifices de laminage associés 211 qui assurent ainsi une fonction de diaphragme bien connue. L'écoulement du fluide hydraulique est ici schématisé par la flèche 300. A partir de cette position, le retour en position normale s'effectue par une nouvelle descente de la rondelle centrale 215 jusqu'à un appui sur le siège associé, puis avec un laminage en détente du fluide hydraulique qui passe alors par les petits trous associés 219 pour traverser le fond 202 du boîtier 201. Dans ces conditions, la chambre haute pression de l'amortisseur n'intervient pas, le seuil de pression de ladite chambre n'étant pas atteint.

En figure 5, la situation est celle d'un atterrissage en catastrophe, avec une vitesse d'impact beaucoup plus élevée. Dans ce cas, la pression induite par les petits orifices de laminage 211 dans la chambre inférieure 118 de l'amortisseur est transmise par les orifices 221 à grande section de passage et par la chambre annulaire d'équilibrage de pression associée 227. On atteint alors rapidement le seuil imposé par le ressort-disque 226, de sorte que la soupape annulaire 225 se soulève de façon quasi-instantanée en permettant un nouveau passage du fluide hydraulique sous un effort contrôlé et par une pression différentielle qui se réduit progressivement quand le débit diminue entre la chambre 118 précitée et la chambre basse pression de l'amortisseur. L'écoulement du fluide hydraulique à travers le fond 202 du boîtier 201 s'effectue ainsi principalement par les orifices 221 à grande section de passage, avec un premier flux contournant la rondelle annulaire 225 du côté intérieur de celle-ci (comme schématisé par la flèche 301), en passant alors par l'ouverture centrale 230 du ressort-disque 226, et avec un autre flux contournant ladite soupape annulaire par l'extérieur de celle-ci (comme schématisé par la flèche 302), en passant alors à l'extérieur du ressort disque 226 par les ouvertures latérales 204 du boîtier. Un tel agencement permet de faire passer un volume important d'huile (plusieurs litres) en un temps extrêmement court (de l'ordre d'un dixième de seconde) avec un contrôle très précis de la perte de charge dans la soupape annulaire 225 afin de contrôler les efforts transmis. On parvient ainsi à obtenir un grand passage de fluide avant et après la soupape annulaire, avec des débits considérables, grace aux sections de passage prévues à cet effet. Il est à noter que le fond 202 du boîtier 201 constitue une butée de fin de course pour la tige-piston 102, lors de la rentrée de celle-ci en situation d'atterrissage en catastrophe.

A titre indicatif, on utilisera un ressort hélicoïdal de rappel dont la raideur est de l'ordre de 20 N/mm pour la fonction diaphragme, et un ressort-disque dont la raideur est de l'ordre de 50000 N/mm pour la fonction écrêtage d'efforts. On obtiendra alors des efforts correspondants respectivement de l'ordre de 100N et 25000N. On constate ainsi que le rapport entre les raideurs des deux ressorts de l'ensemble fonctionnel est de l'ordre de 2500. On pourra obtenir, en utilisant un amortisseur dont les dimensions correspondent à celles habituellement utilisées pour des trains d'atterrissage du type à balancier pour hélicoptère, un débit de fluide hydraulique de l'ordre de 2500 litres par minute. Un tel agencement permettra dans la pratique de réduire à tout le moins de moitié le pic maximum d'efforts transmis lors d'un atterrissage en catastrophe.

On est ainsi parvenu à réaliser des moyens d'écrêtage d'efforts qui sont capables d'intervenir avec des temps de réponse extrêmement courts en cas de vitesses d'impact élevées, et qui permettent à la fois un écrêtage important des efforts et un contrôle précis de la perte de charge associée, ce qui rend possible un contrôle extrêmement précis des efforts transmis.

Un tel dispositif d'écrêtage est en outre extrêmement fiable, dans la mesure ou les organes d'écrêtage d'efforts ne présentent pratiquement aucun risque de coincement, et ont une inertie minimale qui assure une levée extrêmement rapide de la soupape annulaire, et donc un temps de réponse minimum extrêmement satisfaisant dans la pratique. Le dispositif d'écrêtage d'efforts présente enfin une structure simple, avec un petit nombre d'organes constitutifs, et ce dispositif peut être aisément intégrable à des amortisseurs de conception classique, et même des amortisseurs initialement exempts de dispositifs d'écrêtage d'efforts.

L'invention n'est pas limitée aux modes de réalisation qui viennent d'être décrits mais englobe au contraire toute variante reprenant, avec des moyens équivalents, les caractéristiques essentielles énoncées plus haut.

## Revendications

1. Dispositif d'écrêtage d'efforts pour amortisseurs de train d'atterrissage d'aéronef, ledit amortisseur étant du type comportant un corps principal dans lequel coulisse une tige-piston, avec d'une part un moyen d'amortissement hydraulique à diaphragme, intervenant lors des conditions normales d'utilisation, et d'autre part un moyen d'absorption d'énergie à deux chambres contenant un gaz sous pression, dont l'une est à basse pression et l'autre à haute pression, intervenant lors d'un atterrissage en catastrophe, caractérisé en ce qu'il comporte :
- un boîtier (2O1) formant cloison pour le corps principal (1O1) de l'amortisseur, ledit boîtier présentant un fond (2O2) dont la partie centrale inclut un diaphragme (21O) à petits orifices de laminage (211) ;
- une soupape annulaire (225) agencée autour du diaphragme (21O), et permettant, lorsqu'elle est ouverte, de faire passer en un temps très court un volume important de fluide hydraulique ;
- un organe de rappel élastique (226) maintenant la soupape annulaire (225) en position de fermeture, et autorisant l'ouverture de ladite soupape à partir d'un seuil prédéterminé.

2. Dispositif d'écrêtage d'efforts selon la revendication 1, caractérisé en ce que le fond (2O2) du boîtier (2O1) comporte une pluralité de petits orifices de laminage (211) répartis autour de l'axe (X) dudit fond, et une pluralité d'orifices (221) à grande section de passage, disposés concentriquement autour desdits orifices de laminage.

3. Dispositif d'écrêtage d'efforts selon la revendication 2, caractérisé en ce que les orifices (221) à grande section de passage sont angulairement répartis autour de l'axe (X) du fond du boîtier, et débouchent dans une chambre annulaire commune (227) qui est fermée par la soupape annulaire (225).

4. Dispositif d'écrêtage d'efforts selon l'une des revendications 1 à 3, caractérisé en ce que la soupape annulaire (225) est réalisée sous forme d'une rondelle annulaire plate, aussi légère que possible, disposée autour d'une rondelle centrale (215) chargée par un ressort de rappel associé (216) pour la fermeture des petits orifices de laminage (211), ladite rondelle centrale présentant des petits trous de passage (219) pour le laminage en détente.

5. Dispositif d'écrêtage d'efforts selon la revendication 4, caractérisé en ce que l'organe de rappel élastique (226) associé à la soupape annulaire (225) présente une raideur considérablement plus élevée que celle du ressort de rappel (216) associé à la rondelle centrale (215).

6. Dispositif d'écrêtage d'efforts selon l'une des revendications 1 à 5, caractérisé en ce que l'organe de rappel élastique (226) associé à la soupape annulaire (225) est réalisé sous la forme d'un ressort-disque présentant une ouverture centrale de passage (23O), avec un bord intérieur (228) en appui sur ladite soupape annulaire, et un bord extérieur (229) en appui contre une collerette associée (2O5) du boîtier (2O1).

7. Dispositif d'écrêtage d'efforts selon la revendication 6, caractérisé en ce que l'ensemble constitué par la soupape annulaire (225) et le ressort-disque (226) présente une masse minimum pour permettre une ouverture très rapide de ladite soupape annulaire.

8. Dispositif d'écrêtage d'efforts selon la revendication 6 ou la revendication 7, caractérisé en ce que les bords d'appui intérieur (228 ; 228.1) et extérieur (229 ; 229.1) du ressort-disque (226) sont conformés pour limiter les efforts de frottement lors de l'ouverture de la soupape annulaire (225).

9. Dispositif d'écrêtage d'efforts selon la revendication 8, caractérisé en ce que les bords d'appui intérieur (228 ; 228.1) et extérieur (229 ; 229.1) du ressort-disque (226) forment des bourrelets toriques.

10. Dispositif d'écrêtage d'efforts selon la revendication 9, caractérisé en ce que les bourrelets d'appui sont constitués par des joncs toriques rapportés (228.1 ; 229.1).

11. Dispositif d'écrêtage d'efforts selon l'une des revendications 6 à 1O, caractérisé en ce que la collerette d'appui (2O5) est interrompue par des ouvertures latérales (2O4) du boîtier (2O1), de façon que le fluide hydraulique puisse s'écouler, lors de l'ouverture de la soupape annulaire (225), à la fois par l'ouverture centrale (23O) du ressort-disque (226), et par lesdites ouvertures latérales en passant autour dudit ressort-disque.

12. Amortisseur de train d'atterrissage d'aéronef, notamment d'hélicoptère, comportant un corps principal (1O1) dans lequel coulisse une tige-piston (1O2), avec d'une part un moyen d'amortissement hydraulique à diaphragme (21O), intervenant lors des conditions normales d'utilisation, et d'autre part un moyen d'absorption d'énergie (115, 121, 122) à deux chambres (121, 122) contenant un gaz sous pression, dont l'une (121) est à basse pression et l'autre (122) à haute pression, intervenant lors d'un atterrissage en catastrophe, caractérisé en ce qu'il comporte un dispositif d'écrêtage d'efforts (2OO) selon l'une quelconque des revendications 1 à 11, dont le boîtier (2O1) est fixé dans le corps principal (1O1), le fond (2O2) dudit boîtier délimitant d'une part une chambre (118) de fluide hydraulique avec la face terminale (1O6) de la tige-piston (1O2), et étant d'autre part surmonté d'un volume (119) de fluide hydraulique auquel est adjacente la chambre basse pression (121), ladite chambre basse pression étant par ailleurs délimitée par un piston séparateur (115) qui sert aussi à délimiter la chambre haute pression (122) adjacente.

13. Amortisseur de train d'atterrissage selon la revendication 12, caractérisé en ce que la tige-piston (1O2) est agencée en bas et le corps principal (1O1) en haut, ladite tige-piston étant articulée inférieurement sur un composant (12) du train d'atterrissage et ledit corps principal étant articulé supérieurement sur la structure de l'aéronef.

14. Amortisseur de train d'atterrissage selon la revendication 13, caractérisé en ce que le fond (2O2) du boîtier (2O1) constitue une butée de fin de course pour la tige-piston (1O2) lors de la rentrée de celle-ci en situation d'atterrissage en catastrophe.
